# EUROPÄISCHE PATENTSCHRIFT

(11) **EP 3 025 970 B1**
(45) Veröffentlichungstag und Bekanntmachung des Hinweises auf die Patenterteilung: **08.11.2017**
(21) Anmeldenummer: 15195222.3
(22) Anmeldetag: 18.11.2015
(51) Int. Cl.: B65B 13/02, B65B 27/08, B65B 35/40, B65B 13/18, B65B 35/24, B65G 15/12

(54) **VORRICHTUNG ZUM UMREIFEN VON PRODUKTSTAPELN**
DEVICE FOR BUNDLING PRODUCT STACKS
DISPOSITIF DE CERCLAGE DE PRODUITS EMPILES

(30) Priorität: 25.11.2014 CH 18132014
(43) Veröffentlichungstag der Anmeldung: 01.06.2016
(73) Patentinhaber: Ferag AG, 8340 Hinwil (CH)
(72) Erfinder: Jauch, Fabian, 8353 Elgg (CH)
(74) Vertreter: Frei Patent Attorneys

(56) Entgegenhaltungen:
- EP-A1- 1 273 542
- EP-A1- 1 439 143
- EP-A1- 2 157 038
- CH-A5- 591 383
- DE-A1- 10 203 903
- DE-A1- 19 920 531

## Beschreibung

Die Erfindung liegt auf dem Gebiet der Fördertechnik und betrifft eine Vorrichtung nach dem Oberbegriff des Anspruchs 1 und ein Verfahren zum Umreifen von Produktstapeln. Die Vorrichtung enthält eine erste Förderauflage und eine, in Förderrichtung der ersten Förderauflage nachfolgend und von dieser beabstandet angeordnete, zweite Förderauflage, wobei zwischen der ersten und zweiten Förderauflage und im Wesentlichen quer zur Förderrichtung ein Umreifungsspalt zum Umreifen des Produktstapels mit einem Umreifungsband ausgebildet wird.

Flächige Produkte, wie Druckprodukte, werden nach deren Herstellung für den nachfolgenden Transport häufig zu Produktstapeln zusammengefasst und mittels einer Umreifungsvorrichtung einfach oder mehrfach umreift. Die Umreifung sorgt für den Zusammenhalt des Produktstapels.

Zur Herstellung der Umreifung müssen die z. B. an einer Stapelvorrichtung erstellten Produktstapel einer Umreifungsvorrichtung zugeführt werden. Hierzu werden die Produktstapel beispielsweise auf einem Förderband in eine Umreifungsposition in der Umreifungsvorrichtung gefördert. Bei diesem Vorgang ist darauf zu achten, dass die Produkte, welche den Produktstapel, bilden nicht gegenseitig verrutschen und der Produktstapel zerfällt.

So ist es bekannt, Seitenführungseinrichtungen vorzusehen, welche die auf dem Förderband geförderten Produktstapel seitlich führen.

Die Veröffentlichungsschriften DE 102 03 903 A1 und DE 199 20 531 A1 beschreiben jeweils eine Vorrichtung mit einem Kreuzleger und einer an diesen anschliessenden Umreifungseinrichtung zum Umreifen eines Gutstapels. Der Gutstapel wird mittels des Kreuzlegers erstellt und über eine Förderauflage in eine Umreifungsposition gefördert. Der Gutstapel wird hierbei über seitliche Führungs- und Transportwände, die nach Art eines endlosen Förderbandes ausgebildet und mit Vorschublaschen versehen sind, seitlich geführt. Die Vorschublaschen laufen in Förderrichtung hinter dem Gutstapel und schieben den Gutstapel gegen einen in den Förderraum einfahrbaren Paketanschlag. Der Paketanschlag wird aus Anschlagstangen gebildet, welche im Betrieb stationär sind. Während der Vorschubbewegung ist der noch nicht umreifte Gutstapel zur Seite hin durch die seitlichen Führungswände und nach hinten durch die Vorschublaschen geführt und gestützt. Gegen vorne in Förderrichtung wird der Gutstapel lediglich in der Umreifungsposition durch den stationären Paketanschlag gestützt.

Die Veröffentlichungsschrift CH 591 383 A5 beschreibt eine Vorrichtung zum Herstellen von Stapeln aus gefalzten Druckbögen mittels eines Kreuzlegers, welcher ein quer über einem Stapeltisch wirksames Ausstossorgan aufweist. In Wirkrichtung des Ausstossorganes schliesst an den Stapeltisch eine Förderebene mit seitlichen Stützflächen an. Die Stützflächen sind senkrecht auf die Förderebene orientiert und enden mit Abstand vor einem quer über die Förderebene bewegbaren Anschlag.

Die beschriebenen Vorrichtungen weisen nun den Nachteil auf, dass die Paketanschläge im Betrieb stationär sind. Die Gutstapel kommen mit ihrer vorlaufenden Stapelseite also erst mit Erreichen der Umreifungsposition in Anschlag mit dem Paketanschlag. Während ihrer Förderung in die Umreifungsposition bleiben die Stapel in Förderrichtung nach vorne jedoch ungeführt.

Die Veröffentlichungsschrift EP 2 157 038 A1 beschreibt eine Zwischenspeichervorrichtung die dazu bestimmt ist, von einer vorgeordneten Liefervorrichtung, wie Stapelvorrichtung zur Bildung eines Stapels, Stapel flächiger Druckereiprodukte aufzunehmen, zwischenzulagern und an eine nachgeordnete Stapelverarbeitungsvorrichtung, wie Umreifungsvorrichtung, abzugeben.

Auf dem Gebiet der Verarbeitung von Druckereierzeugnissen werden immer komplexere Produkteinheiten hergestellt, welche neben Druckereierzeugnissen, wie Zeitschriften, Zeitungen, Prospekte oder Broschüren, noch Beilagen, wie Warenmuster, Datenträger oder Werbematerial, enthalten. Dies führt dazu, dass die einzelnen Produkteinheiten sowie die aus solchen Produkteinheiten gebildeten Produktstapel unförmig sind. Die Unförmigkeit zeichnet sich insbesondere dadurch aus, dass die einzelnen Produkte oder Produkteinheiten keine konstante Dicke aufweisen. Entsprechend liegend die zu einem Produktstapel zusammengefassten Produkteinheiten nicht mehr flächig aufeinander, wodurch der Produktstapel stark an Stabilität einbüsst.

Dadurch wird die Förderung solcher Produktstapel aus der Stapeleinrichtung bis zur Einnahme der Umreifungsposition und der Ausführung einer ersten Umreifung zunehmend anspruchsvoller. Insbesondere beim Beschleunigen und Abbremsen der Produktstapel besteht die Gefahr, dass Produkte, wie Beilagen oder Warenmuster, bzw. Produkteinheiten aufgrund der auftretenden Trägheitskräfte aus dem Produktstapel rutschen und der Produktstapel zerfällt.

Der Erfindung liegt daher die Aufgabe zugrunde, eine Vorrichtung zum Umreifen von Produktstapeln vorzuschlagen, welche eine optimale Führung der in die Umreifungsposition geförderten Produktstapel zu jeder Seite hin erlaubt.

Der Produktstapel soll insbesondere zu jedem Förderzeitpunkt sicher geführt sein. Ferner soll gewährleistet sein, dass beim Beschleunigen und Abbremsen des ungebundenen Produktstapels die Stabilität des Produktstapels jederzeit gewährleistet ist.

Die Aufgabe wird durch eine Vorrichtung mit den Merkmalen des Anspruch 1 und durch ein Verfahren mit den Merkmalen des Anspruchs 10 gelöst. Weiterbildungen und besondere Ausführungsformen der Erfindung ergeben sich aus den abhängigen Ansprüchen, der Beschreibung und den Zeichnungen.

Gemäss Erfindung ist in Förderrichtung betrachtet auf beiden Seiten der zweiten Förderauflage jeweils eine Seitenführungseinrichtung angeordnet, welche die Produktstapel seitlich führen und mit der zweiten Förderauflage einen Förderraum einschliessen. Die Seitenführungseinrichtungen bilden mit der zweiten Förderauflage insbesondere einen Förderkanal aus.

Die Seitenführungseinrichtungen enthalten ferner jeweils mindestens ein umlaufend antreibbares Vorschubbegrenzungselement, welches seitlich in den Förderraum bzw. Förderkanal vorsteht und dazu ausgelegt ist, zwecks Verhinderung des Wegrutschens bzw. Auseinanderrutschens von Produkten oder Produkteinheiten aus dem Produktstapel in Förderrichtung, mit dem Produktstapel einen Kontaktschluss einzugehen.

Unter Kontaktschluss ist in dieser Patentanmeldung ganz allgemein ein physischer Kontakt, wie Reibkontakt oder Anschlag, zu verstehen.

Die beiden Seitenführungseinrichtungen zur zweiten Förderauflage können über einen gemeinsamen oder über separate Antriebe angetrieben sein.

Das Vorschubbegrenzungselement ist insbesondere darauf ausgelegt in einem vorderen Abschnitt des Produktstapels auf die seitliche und/oder vordere Stapelseite einzuwirken.

Gemäss einer Weiterbildung der Erfindung ist das Vorschubbegrenzungselement ein Vorschubbegrenzungsanschlag, welcher im Förderraum in Förderrichtung betrachtet relativ zum Produktstapel vorlaufend bewegbar ist.

Gemäss einer anderen Weiterbildung der Erfindung ist das Vorschubbegrenzungselement ein Reibungselement, welches dazu ausgelegt ist, mit der in Förderrichtung seitlichen Stapelseite einen Reibkontakt herzustellen. Die seitliche Stapelseite ist die der Seitenführungseinrichtung zugewandte Stapelseite.

Die beiden Seitenführungseinrichtungen liegen einander folglich gegenüber, wobei die zweite Förderauflage dazwischen angeordnet ist. Die Vorschubbegrenzungselemente der beiden Seitenführungseinrichtungen werden insbesondere aufeinander ausgerichtet durch den Förderraum bzw. Förderkanal bewegt. Die beiden Seitenführungseinrichtungen werden insbesondere synchron zueinander angetrieben.

Das Vorschubbegrenzungselement dient der Führung des Produktstapels in Förderrichtung gegen vorne, wenn dieser mit Erreichen der Umreifungsposition angehalten wird.

Der Produktstapel wird insbesondere durch mindestens zwei aufeinander gelegte Produkteinheiten ausgebildet. Die Produkteinheiten enthalten insbesondere mindestens ein Druckereiprodukt, wie Zeitung, Zeitschrift, Broschüre oder Prospekt. Die Produkteinheiten können auch eine Mehrzahl von ineinander gesteckten Produkten enthalten. Ferner können die Produkteinheiten auch Beilagen, wie Warenmuster, Datenträger oder Werbebeilagen enthalten. Die Produkteinheiten können insbesondere auch Umschläge mit eingesteckten Werbebeilagen sein.

Die erste und zweite Förderauflage sind entlang der Förderrichtung seriell, d.h. nacheinander angeordnet.

Der zwischen der ersten und zweiten Förderauflage ausgebildete Umreifungsspalt ist insbesondere Teil eines Umreifungsraumes, innerhalb welchem die Umreifung des Produktstapels stattfindet. Der Umreifungsraum liegt insbesondere in einer vertikal und quer zur Förderrichtung des Produktstapels ausgerichteten Ebene. Der Umreifungsraum kann durch einen Bandführungskanal begrenzt sein.

Die Umreifung des Produktstapels erfolgt insbesondere quer zur Förderrichtung des Produktstapels. Das Umreifungsband, mit welchem der Produktstapel umreift wird, kann aus Kunststoff oder Metall sein. Das Umreifungsband kann auch ein textiles Gebilde wie Gewebe oder Schnur aus Kunststoff- oder Naturfasern sein.

Die Seitenführungseinrichtungen enthalten jeweils mindestens einen, um mindestens zwei voneinander beabstandete Umlenkorgane umlaufend angetriebenen Führungskörper. Der Führungskörper ist insbesondere flexibel. Die Umlenkorgane sind insbesondere senkrecht zur Förderauflage angeordnet.

Das mindestens eine Vorschubbegrenzungselement ist hierbei insbesondere am Führungskörper angeordnet und ist mit diesem umlaufend bewegbar.

Die zweite Förderauflage wird insbesondere über einen Antrieb angetrieben.

Gemäss einer Weiterbildung der Vorrichtung wird die zweite Förderauflage durch ein umlaufend angetriebenes Förderband, insbesondere eines Bandförderers, ausgebildet.

Die zweite Förderauflage ist insbesondere horizontal ausgerichtet. Die Förderauflage bzw. das Förderband kann in einen Arbeitstisch der Vorrichtung integriert sein.

Das Vorschubbegrenzungselement dient der Führung und Stützung des in Förderrichtung vorderen Stapelbereichs bzw. der vorderen Stapelseite, insbesondere beim Abbremsen des Produktstapels bei Erreichen der Umreifungsposition.

Gemäss Erfindung ist in Förderrichtung betrachtet auf beiden Seiten der ersten Förderauflage jeweils ebenfalls eine Seitenführungseinrichtung angeordnet. Die beiden Seitenführungseinrichtungen führen den Produktstapel seitlich. Sie bilden zusammen mit der Förderauflage einen Förderraum aus. Der Förderraum ist insbesondere ein Förderkanal.

Gemäss einer Weiterbildung der Seitenführungseinrichtungen zur ersten Förderauflage enthalten diese mindestens ein umlaufend antreibbares Vorschubbegrenzungselement, welches seitlich in den Förderraum bzw. Förderkanal vorsteht und dazu ausgelegt ist, zwecks Verhinderung des Wegrutschens einzelner Produkte oder Produkteinheiten vom Produktstapel in Förderrichtung, mit dem Produktstapel einen Kontaktschluss einzugehen.

Gemäss einer Weiterbildung der Erfindung ist das Vorschubbegrenzungselement ein Vorschubbegrenzungsanschlag, welcher im Förderraum in Förderrichtung relativ zum Produktstapel vorlaufend bewegbar ist.

Gemäss einer anderen Weiterbildung der Erfindung ist das Vorschubbegrenzungselement ein Reibungselement ist, welches dazu ausgelegt ist, mit der in Förderrichtung seitlichen, d.h. mit der dieser Seitenführungseinrichtung zugewandten, Stapelseite einen Reibkontakt herzustellen.

Die beiden Seitenführungseinrichtungen liegen einander folglich gegenüber, wobei die zweite Förderauflage dazwischen angeordnet ist.

Die beiden Seitenführungseinrichtungen zur ersten Förderauflage können über einen gemeinsamen oder über separate Antriebe angetrieben sein.

Die Vorschubbegrenzungselemente der beiden Seitenführungseinrichtungen werden insbesondere aufeinander ausgerichtet durch den Förderraum bzw. Förderkanal bewegt. Die beiden Seitenführungseinrichtungen werden insbesondere synchron zueinander angetrieben.

Die beiden Paarungen von Seitenführungseinrichtungen zur ersten und zweiten Förderauflage werden insbesondere synchron zueinander angetrieben.

Das Vorschubbegrenzungselement dient ebenfalls der Führung und Stützung des in Förderrichtung vorderen Stapelbereichs bzw. der vorderen Stapelseite bevor der Produktstapel mit seiner vorderen Stapelseite über den Umreifungsspalt gefördert und in den Einflussbereich der zweiten Förderauflage gelangt.

Muss beispielsweise der geförderte Produktstapel abgebremst werden, bevor dieser seine Umreifungsposition erreicht hat, so stellt das Vorschubbegrenzungselement sicher, dass Produkte oder Produkteinheiten des Produktstapels nicht nach vorne verrutschen können.

Gemäss einer Weiterbildung der Seitenführungseinrichtung zur ersten Förderauflage enthält diese mindestens einen umlaufend antreibbaren Vorschubanschlag, welcher im Förderraum bzw. Förderkanal in Förderrichtung relativ zum Produktstapel nachlaufend bewegbar ist.

Der Produktstapel wird über den Vorschubanschlag, insbesondere beim Beschleunigen des Produktstapels, in Förderrichtung betrachtet gegen hinten gestützt.

Der Produktstapel kann ferner über den Vorschubanschlag in Förderrichtung geschoben, insbesondere in die Umreifungsposition geschoben, werden.

Die Vorschubanschläge der beiden Seitenführungseinrichtungen werden insbesondere aufeinander ausgerichtet durch den Förderraum bzw. Förderkanal bewegt. Die beiden Seitenführungseinrichtungen mit den Vorschubanschlägen werden insbesondere synchron zueinander angetrieben.

Es ist möglich, dass die Seitenführungseinrichtungen zur ersten Förderauflage jeweils sowohl mindestens ein vorlaufendes Vorschubbegrenzungselement als auch mindestens einen nachlaufenden Vorschubanschlag enthalten. Dadurch wird der Produktstapel in Förderrichtung betrachtet sowohl zu den beiden Seiten hin als auch gegen vorne und gegen hinten geführt und gegen ein Verrutschen gestützt.

Gemäss Erfindung enthalten die Seitenführungseinrichtungen zur ersten Förderauflage jeweils mindestens einen, um mindestens zwei voneinander beabstandete Umlenkorgane umlaufend angetriebenen Führungskörper. Der Führungskörper ist insbesondere flexibel. Die Umlenkorgane sind insbesondere senkrecht zur Förderauflage angeordnet.

Ist mindestens ein Vorschubbegrenzungselement vorgesehen, so ist dieses insbesondere am Führungskörper angeordnet und mit diesem umlaufend bewegbar.

Ist mindestens ein Vorschubanschlag vorgesehen, so ist dieser insbesondere am Führungskörper angeordnet und mit diesem umlaufend bewegbar.

Sind sowohl mindestens ein Vorschubbegrenzungselement als auch mindestens ein Vorschubanschlag vorgesehen, so sind diese an einem gemeinsamen oder an verschiedenen Führungskörper angeordnet und mit diesem umlaufend bewegbar.

Die zweite Förderauflage wird insbesondere über einen Antrieb angetrieben. Die erste und zweite Förderauflage können über separate oder über einen gemeinsamen Antrieb angetrieben sein. Die beiden Förderauflagen werden insbesondere synchron angetrieben.

Gemäss einer Weiterbildung der Vorrichtung wird die erste Förderauflage durch ein umlaufend angetriebenes Förderband, insbesondere eines Bandförderers, ausgebildet.

Die erste Förderauflage ist insbesondere horizontal ausgerichtet. Die erste Förderauflage bzw. das Förderband kann in den Arbeitstisch der Vorrichtung integriert sein.

Gemäss einer Weiterbildung der Erfindung umfasst die Vorrichtung eine Verschiebeeinrichtung, mittels welcher mindestens eine, insbesondere beide Seitenführungseinrichtungen einer Paarung von Seitenführungseinrichtungen aus ihrer Betriebsposition in eine Passivposition verschiebbar sind.

Die Verschiebeeinrichtung kann dazu ausgelegt sein, mindestens eine, insbesondere beide Seitenführungseinrichtungen einer Paarung von Seitenführungseinrichtungen über eine translatorische Bewegung oder eine Schwenkbewegung oder einer Kombination von translatorischer Bewegung und Schwenkbewegung zwischen der Betriebsposition und Passivposition zu bewegen.

Gemäss einer Weiterbildung der Erfindung umfasst die Vorrichtung eine Verschiebeeinrichtung, mittels welcher mindestens eine, insbesondere beide Seitenführungseinrichtungen einer Paarung von Seitenführungseinrichtungen translatorisch verschiebbar und so die Distanz zwischen den beiden Seitenführungseinrichtungen einstellbar ist. Die Verschiebeeinrichtung kann der weiter oben beschriebenen Verschiebeeinrichtung entsprechen.

Der Führungskörper einer Seitenführungseinrichtung kann ein Riemen, ein Seil, eine Kette oder ein Band sein. Der Führungskörper ist insbesondere ein Band, welches eine seitliche Führungswand ausbildet. Die Führungswand ist insbesondere senkrecht zur Förderauflage angeordnet.

Das Band kann insbesondere in der Art eines endlosen Förderbandes ausgebildet sein. Das Band kann insbesondere eine Modulbandkette mit einer Mehrzahl von miteinander verbundenen Modulbandgliedern sein.

Das Umlenkorgan kann eine Umlenkrolle sein. Eine oder beide der mindestens zwei Umlenkrollen kann angetrieben sein. Die Drehachse der Umlenkorgane ist jeweils insbesondere senkrecht zur Förderauflage angeordnet.

Das Vorschubbegrenzungselement kann elastische Eigenschaften aufweisen. Das Vorschubbegrenzungselement kann insbesondere aus einem elastischen Material, wie einem Elastomer, ausgebildet sein oder dieses enthalten.

Der Vorschubbegrenzungsanschlag kann leistenförmig ausgebildet sein. Der Vorschubbegrenzungsanschlag kann sich vertikal zur Förderauflage erstrecken.

Das als Reibungselement ausgebildete Vorschubbegrenzungselement kann z. B. als Bürste ausgebildet sein oder in den Förderraum vorstehende Lamellen aufweisen.

Der Vorschubanschlag kann ebenfalls leistenförmig ausgebildet sein. Der Vorschubanschlag kann sich vertikal zur Förderauflage erstrecken.

Die Seitenführungseinrichtungen können beispielsweise an einer oberhalb der Seitenführungseinrichtungen angeordneten Halterung befestigt, insbesondere aufgehängt, sein. Die Halterung kann beispielsweise ein quer zur Förderrichtung über die Förderauflage angeordnete Traverse in Form eines Querträgers sein.

Die Erfindung betrifft auch ein Verfahren zum Umreifen von Produktstapeln mit einer Vorrichtung gemäss obiger Beschreibung. Das Verfahren umfasst die folgenden Schritte:
- Fördern eines auf der ersten Förderauflage aufliegenden Produktstapels in Förderrichtung,
- Übernehmen des durch die erste Förderauflage, insbesondere über den Umreifungsspalt hinaus, geförderten Produktstapels durch die zweite Förderauflage und
- Weiterfördern des Produktstapels in eine Umreifungsposition, in welcher der Produktstapel quer über dem Umreifungsspalt angeordnet ist,
- Umreifen des Produktstapels mit einem Umreifungsband,
- Weiterfördern des umreiften Produktstapels,
wobei das Vorschubbegrenzungselement der mindestens einen Seitenführungseinrichtung der zweiten Förderauflage seitlich oder vorlaufend zum Produktstapel in Förderrichtung mitbewegt wird, und mindestens beim Abbremsen des Produktstapels mit diesem einen Kontaktschluss eingeht, so dass Produkte oder Produkteinheiten des Produktstapels nicht in Förderrichtung wegrutschen können.

Der Produktstapel liegt folglich in der Umreifungsposition mit einem in Förderrichtung betrachtet hinteren Stapelabschnitt auf der ersten Förderauflage und mit einem vorderen Stapelabschnitt auf der zweiten Förderauflage.

Das Umreifen des Produktstapels mit einem Umreifungsband wird auch als Binden bezeichnet. Die Produkte bzw. Produkteinheiten des Produktstapels werden durch die Umreifung zusammengehalten und gegen ein gegenseitiges Verrutschen gesichert.

Die Bindung kann eine Quer- oder Längsbindung sein. Es können mehrere Bindungen vorgenommen werden. Eine kombinierte Quer- und Längsbindung weist den Vorteil auf, dass diese dem Produktstapel zu allen Seiten hin einen guten Zusammenhalt vermittelt.

Gemäss einer Weiterbildung des Verfahrens ist das Vorschubbegrenzungselement ein Vorschubbegrenzungsanschlag, welcher vorlaufend zum Produktstapel in Förderrichtung mitbewegt wird, derart dass Produkte oder Produkteinheiten des Produktstapels beim Abbremsen des Produktstapels am Vorschubbegrenzungsanschlag in Anschlag kommen.

Gemäss einer anderen Weiterbildung des Verfahrens ist das Vorschubbegrenzungselement ein Reibungselement, welches seitlich oder vorlaufend zum Produktstapel in Förderrichtung mitbewegt wird, derart dass in Förderrichtung betrachtet die seitliche Stapelseite des Produktstapels beim Abbremsen des Produktstapels mit dem Vorschubbegrenzungselement einen seitlichen Reibkontakt eingeht, so dass Produkte oder Produkteinheiten des Produktstapels nicht in Förderrichtung nach vorne wegrutschen können.

Das Vorschubbegrenzungselement kann mit einer kleineren Geschwindigkeit als die dazugehörige zweite Förderauflage bewegt werden. Das Vorschubbegrenzungselement kann auch mit derselben Geschwindigkeit wie die zweite Förderauflage bewegt werden. Die Geschwindigkeiten der Förderauflage und des Vorschubbegrenzungselements können insbesondere synchron sein.

Das umlaufend bewegte Vorschubbegrenzungselement, insbesondere wenn es sich um einen Vorschubbegrenzungsanschlag handelt, kann insbesondere vor dem Hineinbewegen der vorderen Stapelseite zwischen die Seitenführungseinrichtungen um die Umlenkorgane aus einem Rückführabschnitt in den Förderraum bzw. Förderkanal eingeschwenkt und dem Produktstapel vorlaufend durch den Förderraum bewegt werden.

Der Produktstapel kommt bei diesem Vorgang mit der vorderen Stapelseite in Anschlag mit dem Vorschubbegrenzungsanschlag.

Das umlaufend bewegte Vorschubbegrenzungselement kann auch gleichzeitig mit dem Hineinbewegen des Produktstapels zwischen die Seitenführungseinrichtungen um die Umlenkorgane aus einem Rückführabschnitt in den Förderraum bzw. Förderkanal eingeschwenkt und seitlich vom Produktstapel mitlaufend durch den Förderraum bewegt werden.

Der Produktstapel wird insbesondere gemeinsam mit dem Vorschubbegrenzungselement in die Umreifungsposition bewegt.

Bei der Weiterförderung des umreiften Produktstapels wird das Vorschubbegrenzungselement am Ende des Förderraums bzw. Förderkanals um das Umlenkorgan wieder in den Rückführabschnitt bewegt und entgegen der Förderrichtung zurückbewegt.

Die Erfindung weist den Vorteil, dass die Produkte bzw. Produkteinheiten beim Abbremsen des Produktstapels nicht mehr aufgrund der Trägheitskraft nach vorne wegrutschen können, wodurch der Produktstapel zerfallen würde.

Dadurch können auch Produktstapel mit unförmigen Produkten bzw. Produkteinheiten, welche z. B. nicht flächig aufeinander liegen, problemlos verarbeitet werden.

Ferner ist die Qualität des gebundenen Produktstapels sehr hoch, da die Produkteinheiten des Produktstapels bei der Umreifung nicht nur zur Seite sondern auch nach vorne ausgerichtet sind.

Die Erfindung erlaubt zudem auch das Umreifen der Produktstapel in schnelleren Zyklen, welche unweigerlich mit höheren Beschleunigungen verbunden sind. So sind dank der vorliegenden Erfindung beispielsweise Zykluszeiten von unter 2 Sekunden möglich. Die Produktstapel werden dabei mit Geschwindigkeiten von 0.5 bis 1 m/s bewegt. Entsprechend steil sind daher die Brems- und Beschleunigungsrampen vor und nach dem Umreifen des Produktstapels im Stillstand und entsprechend gross die daraus resultierenden Trägheitskräfte.

Da die Vorschubbegrenzungselemente im Betrieb nicht als feststehende Anschlagelemente ausgebildet sind sondern vielmehr in Förderrichtung mitbewegt werden, können die in Förderrichtung in die Umreifungsposition bewegten Produktstapel auch nicht auf die Vorschubbegrenzungselemente aufprallen. Dadurch wird eine Beschädigung der Produktstapel oder ein Zurückprallen der Produktstapel von den Vorschubbegrenzungselementen verhindert.

Ein weiterer Vorteil der vorlaufenden Erfindung liegt auch darin, dass bestehende Umreifungsvorrichtungen vergleichsweise einfach und kostengünstig mit den erfindungsgemässen, technischen Merkmalen nachrüstbar sind.

Beispiele der Erfindung sind in den Zeichnungen dargestellt und nachfolgend beschrieben. Es zeigen schematisch:
- Fig. 1a - 1e: eine perspektivische Ansicht einer erfindungsgemässen Vorrichtung gemäss einer ersten Ausführungsform in verschiedenen Betriebspositionen;
- Fig. 2: eine perspektivische Ansicht einer erfindungsgemässen Vorrichtung gemäss einer zweiten Ausführungsform;
- Fig. 3: eine perspektivische Ansicht der Befestigung der Seitenführungseinrichtungen.

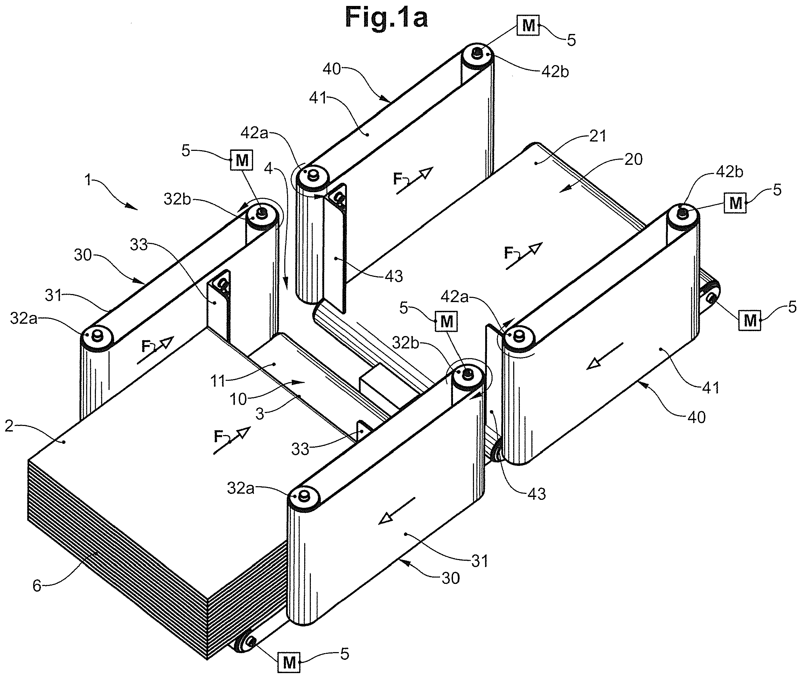

Die Figuren 1a bis 1e zeigen eine erste Ausführungsform der Erfindung und den Ablauf des erfindungsgemässen Verfahrens anhand einer chronologischen Bildabfolge.

Die Vorrichtung 1 enthält einen ersten Bandförderer 11 mit einem ersten Förderband, welches eine horizontale Förderauflage 10 ausbildet. Der erste Bandförderer 11 bzw. das Förderband wird mittels eines Antriebes 5 angetrieben.

Die Vorrichtung 1 enthält im Weiteren einen in Förderrichtung F im Anschluss an den ersten Bandförderer 11 angeordneten, zweiten Bandförderer 21 mit einem zweiten Förderband, welches ebenfalls eine horizontale Förderauflage 20 ausbildet. Der zweite Bandförderer 21 bzw. das Förderband wird mittels eines Antriebes 5 angetrieben. Der erste und zweite Bandförderer 11, 21 werden synchron zueinander angetrieben.

Die beiden Bandförderer 11, 21 sind in Förderrichtung F voneinander beabstandet, so dass zwischen dem ersten und zweiten Bandförderer 11, 21 ein quer zur Förderrichtung F verlaufender Umreifungsspalt 4 ausgebildet wird.

Seitlich vom ersten Bandförderer 11 ist jeweils eine Seitenführungseinrichtung 30 angeordnet. Der erste Bandförderer 11 und die beiden Seitenführungseinrichtungen 30 bilden zusammen einen Förderkanal für die Produktstapel 2 aus.

Die Seitenführungseinrichtungen 30 umfassen jeweils ein Führungsband 31, welches um zwei in Förderrichtung F hintereinander und voneinander beabstandet angeordnete Umlenkrollen 32a, 32b umlaufend geführt ist. Die Umlenkrollen 32a, 32b und entsprechend das Führungsband 31 sind senkrecht zur Förderauflage 10 ausgerichtet. Entsprechend bildet das Führungsband 31 eine seitliche, vertikale Führungswand aus.

Am Führungsband 31 ist ein Vorschubbegrenzungsanschlag 33 angeordnet, welcher mit dem Führungsband 31 umlaufend mitbewegt wird. Der Vorschubbegrenzungsanschlag 33 bildet für den Produktstapel 2 im Förderkanal einen vorlaufenden Anschlag aus.

Ferner ist jeweils seitlich vom zweiten Bandförderer 21 ebenfalls eine Seitenführungseinrichtung 40 angeordnet. Der zweite Bandförderer 21 und die beiden Seitenführungseinrichtungen 40 bilden zusammen ebenfalls einen Förderkanal für die Produktstapel 2, 2' aus.

Die beiden Seitenführungseinrichtungen 40 umfassen jeweils ebenfalls ein Führungsband 41, welches um zwei in Förderrichtung F hintereinander und voneinander beabstandet angeordnete Umlenkrollen 42a, 42b umlaufend geführt ist. Die Umlenkrollen 42a, 42b und entsprechend das Führungsband 41 sind senkrecht zur Förderauflage 20 ausgerichtet. Entsprechend bildet das Führungsband 41 eine seitliche, vertikale Führungswand aus.

Am Führungsband 41 ist ein Vorschubbegrenzungsanschlag 43 angeordnet, welcher mit dem Führungsband 41 umlaufend mitbewegt wird. Der Vorschubbegrenzungsanschlag 43 bildet für den Produktstapel 2, 2' im Förderkanal einen vorlaufenden Anschlag aus.

Die beiden Paarungen von Seitenführungseinrichtungen 30, 40 werden über Antriebe 5 synchron zueinander angetrieben.

Zur Umreifung eines Produktstapels 2, welcher zum Beispiel in einer Stapelvorrichtung erstellt wurde, wird der Produktstapel 2 dem ersten Bandförderer 10 zugefördert. Sowohl das Förderband des Bandförderers 10 als auch die seitlichen Führungsbänder 31 der Seitenführungseinrichtungen 30 werden hierbei angetrieben.

Bevor der Produktstapel 2 jedoch mit seiner vorderen Stapelseite 3 zwischen die beiden Seitenführungseinrichtungen 30 bewegt wird, werden die Vorschubbegrenzungsanschläge 33 der beiden Führungsbänder 31 aus dem Rückführabschnitt in den Förderkanal eingeschwenkt, so dass diese gegenüber dem zugeführten Produktstapel 2 vorlaufend angeordnet sind (siehe Figur 1a).

Die Bewegung der Führungsbänder 31 und der Vorschubbegrenzungsanschläge 33 ist mit der Zuförderung des Produktstapels 2 synchronisiert.

Die beiden, vorlaufenden und aufeinander ausgerichteten Vorschubbegrenzungsanschläge 33 bilden einen Anschlag für die in Förderrichtung F vordere Stapelseite 3 aus und werden gemeinsam mit dem Produktstapel 2 in Förderrichtung F bewegt. Sollte der Produktstapel 2 aus bestimmten Gründen abgebremst werden müssen, so verhindern die Vorschubbegrenzungsanschläge 33 ein Wegrutschen von Produkten oder Produkteinheiten nach vorne.

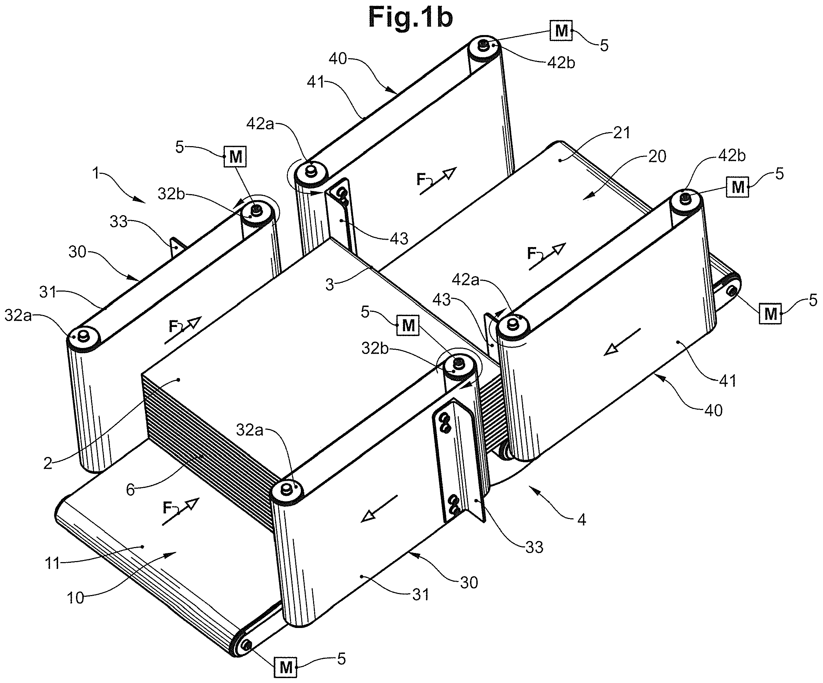

Erreicht die vordere Stapelseite 3 den Umreifungsspalt 4, werden die Vorschubbegrenzungsanschläge 33 aus dem Förderkanal ausgeschwenkt und in den Rückführabschnitt bewegt (siehe Figur 1b).

Der Produktstapel 2 wird nun durch den ersten Bandförderer 10 in Förderrichtung F über den Umreifungsspalt 4 hinaus weitergefördert.

Bevor der Produktstapel 2 jedoch mit seiner vorlaufenden Stirnkante 3 zwischen die beiden Seitenführungseinrichtungen 40 des zweiten Bandförderers 20 bewegt wird, werden die Vorschubbegrenzungsanschläge 43 der beiden Führungsbänder 41 aus dem Rückführabschnitt in den Förderkanal eingeschwenkt, so dass diese gegenüber dem den Umreifungsspalt 4 in Förderrichtung F überquerenden Produktstapel 2 vorlaufend angeordnet sind.

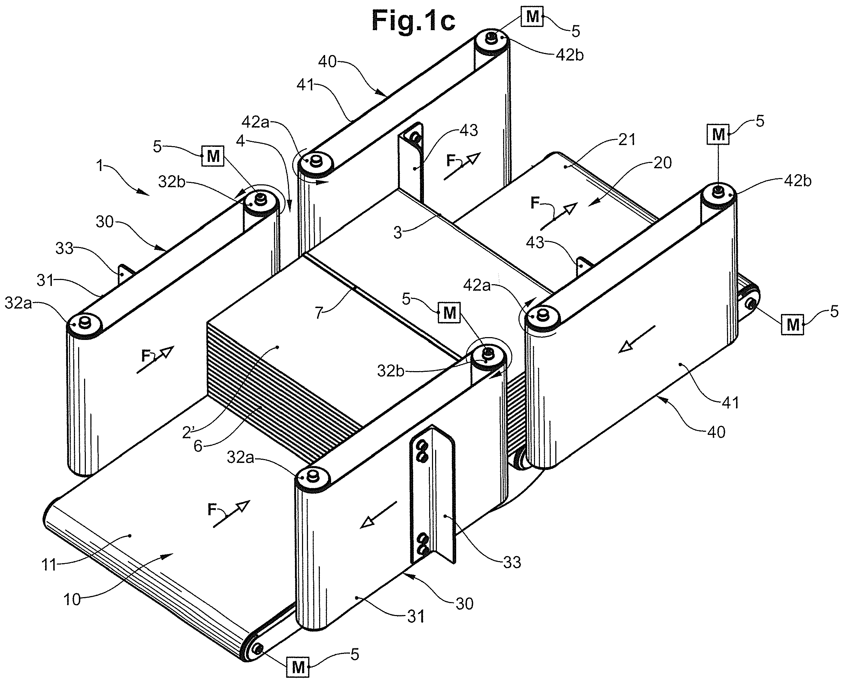

Mit Erreichen der Umreifungsposition werden die Bandförderer 11, 21 sowie auch die Führungsbänder 31, 41 mit ihren Vorschubbegrenzungsanschlägen 33, 43 abgebremst und angehalten. Der Produktstapel 2 liegt in der Umreifungsposition quer über dem Umreifungsspalt 4 (siehe Figur 1c).

Die Vorschubbegrenzungsanschläge 43 verhindern nun beim Anhalten des Stapels 2 in der Umreifungsposition ein Wegrutschen von Produkten oder Produkteinheiten nach vorne.

Der Produktstapel 2 wird nun in der Umreifungsposition umreift und anschliessend in Förderrichtung F weitergefördert. Hierzu werden die Bandförderer 11, 21 sowie die Führungsbänder 31, 41 wieder in Bewegung versetzt.

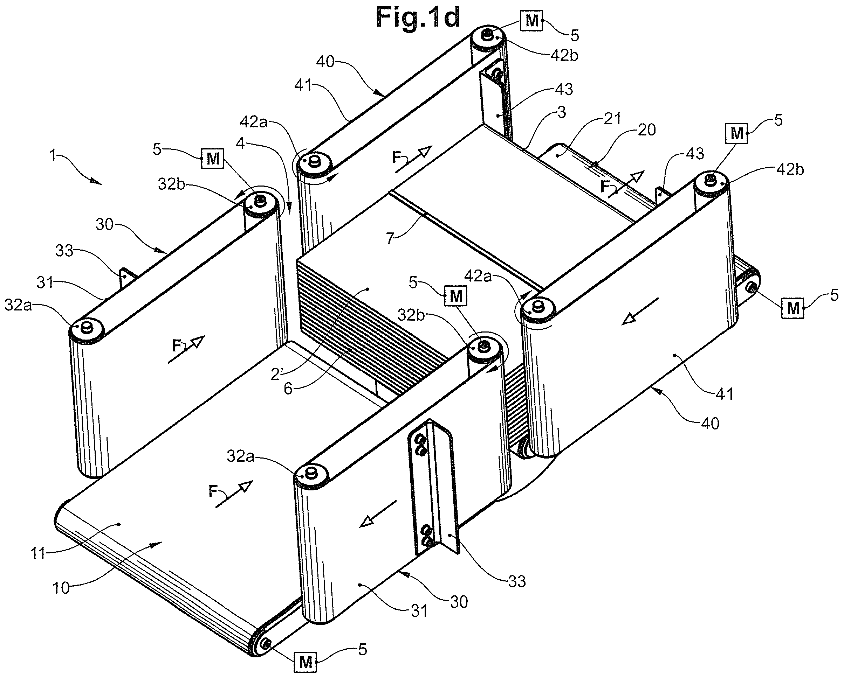

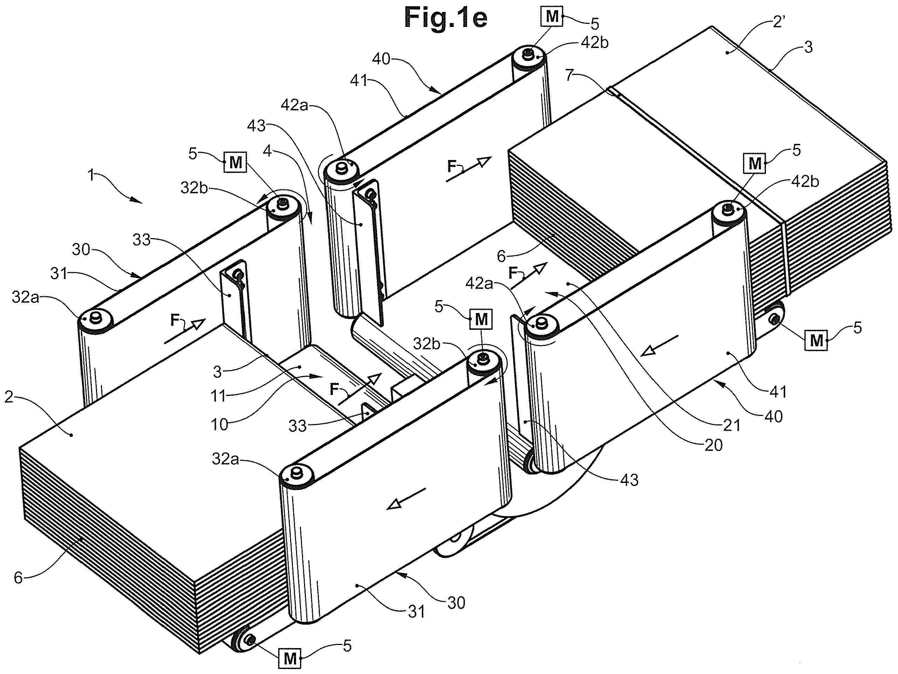

Der umreifte Produktstapel 2' wird mittels des zweiten Bandförderers 21 aus der Umreifungsposition herausgefördert (siehe Figur 1d und 1e).

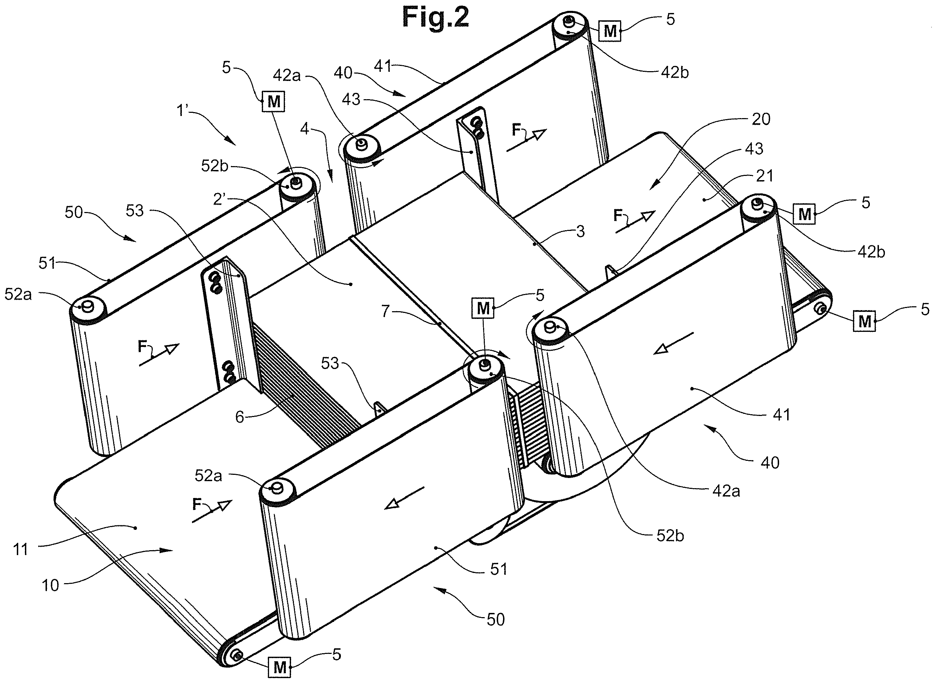

Die in Figur 2 gezeigte Ausführungsform einer erfindungsgemässen Vorrichtung 1' unterscheidet sich von der Ausführungsform nach Figur 1a-1e dadurch, dass die Seitenführungseinrichtungen 50 zur ersten Förderauflage 10 jeweils ein Führungsband 51 enthalten, an welchem an Stelle von mindestens einem Vorschubbegrenzungsanschlag mindestens ein Vorschubanschlag 53 angebracht ist, welcher nachlaufend zu den, auf dem ersten Bandförderer 11 geförderten Produktstapel 2 angeordnet ist. Die nachlaufenden Vorschubanschläge 53 bilden eine Führung für die in Förderrichtung hintere Stapelseite 6 aus.

Die Vorschubanschläge 53 der beiden Seitenführungseinrichtungen 50 sind aufeinander ausgerichtet und werden synchron durch den Förderkanal bewegt. Sie können derart durch den Förderkanal bewegt werden, dass die Produktstapel 2 durch die Vorschubanschläge 53 in Förderrichtung F geschoben und/oder gegen hinten gestützt werden.

Der Produktstapel 2 ist nun gemäss dieser Ausführungsform in einer Position, in welcher dieser quer über dem Umreifungsspalt 4 angeordnet ist, und insbesondere in der Umreifungsposition, sowohl an seiner hinteren Stapelseite 6 als auch an seiner vorderen Stapelseite 3 durch entsprechende Anschläge 43, 53 geführt und gestützt.

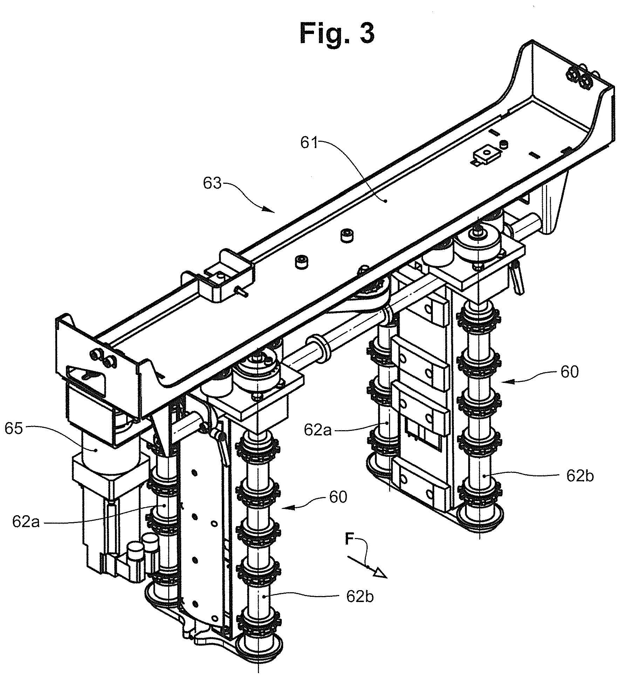

Die Figur 3 zeigt eine mögliche Ausführung des konstruktiven Aufbaus einer Seitenführung 63 für Produktstapel 2. Die Seitenführung 63 enthält eine Quertraverse 61, an welcher jeweils zwei voneinander beabstandete Seitenführungseinrichtungen 60 angebracht sind. Die Quertraverse 61 ist oberhalb der Seitenführungseinrichtungen 60 angeordnet, wobei die Seitenführungseinrichtungen 60 hängend an der Quertraverse 61 befestigt sind.

Die Seitenführungseinrichtungen 60 sind ohne das dazugehörige Führungsband dargestellt. Entsprechend sind jeweils die beiden Umlenkrollen 62a, 62b gut sichtbar. Die Umlenkrollen 62a, 62b enthalten Antriebsräder mit einer Zahnung zum Antreiben der Führungsbänder. Mindestens eine der beiden Umlenkrollen 62a, 62b wird über einen Antrieb 65 angetrieben.

## Patentansprüche

1. Vorrichtung (1) zum Umreifen von Produktstapeln (2), enthaltend eine erste Förderauflage (10) und eine, in Förderrichtung (F) der ersten Förderauflage (10) nachfolgend und von dieser beabstandet angeordnete, zweite Förderauflage (20), wobei zwischen der ersten und zweiten Förderauflage (20) und im Wesentlichen quer zur Förderrichtung (F) ein Umreifungsspalt (4) zum Umreifen des Produktstapels (2) mit einem Umreifungsband (7) ausgebildet wird, und in Förderrichtung (F) betrachtet auf beiden Seiten der ersten Förderauflage (10) jeweils eine Seitenführungseinrichtung (30) angeordnet ist, welche jeweils mindestens einen, um mindestens zwei voneinander beabstandete Umlenkorgane umlaufend angetriebenen Führungskörper (31) umfassen, und welche die Produktstapel (2) seitlich führen und mit der ersten Förderauflage (10) einen Förderraum ausbilden,
**dadurch gekennzeichnet dass**
in Förderrichtung (F) betrachtet auf beiden Seiten der zweiten Förderauflage (20) jeweils eine Seitenführungseinrichtung (40) angeordnet ist, welche die Produktstapel (2) seitlich führen und mit der zweiten Förderauflage (20) einen weiteren Förderraum einschliessen, und die Seitenführungseinrichtungen (40) jeweils mindestens einen, um mindestens zwei voneinander beabstandete Umlenkorgane umlaufend angetriebenen Führungskörper (41) sowie jeweils mindestens ein umlaufend antreibbares Vorschubbegrenzungselement (43) enthalten, welches seitlich in den Förderraum vorsteht und dazu ausgelegt ist, zwecks Verhinderung des Auseinanderrutschens von Produkten oder Produkteinheiten des Produktstapels (2) in Förderrichtung (F), mit dem Produktstapel (2) einen Kontaktschluss einzugehen.

2. Vorrichtung nach Anspruch 1, **dadurch gekennzeichnet, dass** das Vorschubbegrenzungselement (43) ein Vorschubbegrenzungsanschlag ist, welcher im Förderraum in Förderrichtung (F) betrachtet relativ zum Produktstapel (2) vorlaufend bewegbar ist.

3. Vorrichtung nach einem der vorangegangenen Ansprüche, **dadurch gekennzeichnet, dass** das mindestens eine Vorschubbegrenzungselement (43) am Führungskörper (41) angeordnet ist.

4. Vorrichtung nach Anspruch 1, **dadurch gekennzeichnet, dass** die Seitenführungseinrichtung (30) mindestens ein umlaufend antreibbares Vorschubbegrenzungselement (33) enthält, welches seitlich in den Förderraum vorsteht und dazu ausgelegt ist, zwecks Verhinderung des Wegrutschens einzelner Produkte oder Produkteinheiten des Produktstapels (2) in Förderrichtung (F), mit dem Produktstapel (2) einen Kontaktschluss einzugehen.

5. Vorrichtung nach Anspruch 4, **dadurch gekennzeichnet, dass** das Vorschubbegrenzungselement (33) ein Vorschubbegrenzungsanschlag ist, welcher im Förderraum in Förderrichtung (F) relativ zum Produktstapel (2) vorlaufend bewegbar ist.

6. Vorrichtung nach einem der Ansprüche 1 bis 5, **dadurch gekennzeichnet, dass** die Seitenführungseinrichtung (50) der ersten Förderauflage (10) mindestens einen umlaufend antreibbaren Vorschubanschlag (53) enthält, welcher im Förderraum in Förderrichtung (F) betrachtet relativ zum Produktstapel (2) nachlaufend bewegbar ist.

7. Vorrichtung nach einem der Ansprüche 4 bis 6, **dadurch gekennzeichnet, dass** das mindestens eine Vorschubbegrenzungselement (33) am Führungskörper (31) angeordnet ist.

8. Vorrichtung nach einem der vorangegangenen Ansprüche, **dadurch gekennzeichnet, dass** der Führungskörper (31, 41) ein flächenförmiges Band, insbesondere eine Modulbandkette mit einer Mehrzahl von miteinander verbundenen Modulbandgliedern, ist.

9. Vorrichtung nach einem der vorangegangenen Ansprüche, **dadurch gekennzeichnet, dass** der mindestens eine Vorschubbegrenzungsanschlag (33, 43) leistenförmig ist.

10. Verfahren zum Umreifen von Produktstapeln (2) mit einer Vorrichtung (1) nach einem der vorangegangenen Ansprüche mit den folgenden Schritten:
- Fördern eines auf der ersten Förderauflage (10) aufliegenden Produktstapels (2) in Förderrichtung (F),
- Übernehmen des durch die erste Förderauflage (10) geförderten Produktstapels (2) durch die zweite Förderauflage (20) und
- Weiterfördern des Produktstapels (2) in eine Umreifungsposition, in welcher der Produktstapel (2) quer über dem Umreifungsspalt (4) angeordnet ist,
- Umreifen des Produktstapels (2) mit einem Umreifungsband (7),
- Weiterfördern des umreiften Produktstapels (2),
wobei das Vorschubbegrenzungselement (43) der Seitenführungseinrichtungen (40) der zweiten Förderauflage (20) seitlich oder vorlaufend zum Produktstapel (2) in Förderrichtung (F) mitbewegt wird, und mindestens beim Abbremsen des Produktstapels (2) mit diesem einen Kontaktschluss eingeht, so dass Produkte oder Produkteinheiten des Produktstapels (2) nicht in Förderrichtung (F) wegrutschen können.

11. Verfahren nach Anspruch 10, **dadurch gekennzeichnet, dass** das Vorschubbegrenzungselement (43) ein Vorschubbegrenzungsanschlag ist, welcher vorlaufend zum Produktstapel (2) in Förderrichtung (F) mitbewegt wird, derart dass der Produktstapel (2) oder einzelne Produkteinheiten beim Abbremsen des Produktstapels (2) am Vorschubbegrenzungsanschlag (43) in Anschlag kommt.

## Claims

1. A device (1) for strapping product stacks (2), comprising a first conveying rest (10) and a second conveying rest (20) which in the conveying direction (F) is arranged subsequently to the first conveying rest (10) and distanced to this, wherein a strapping gap (4) for strapping the product stack (2) with a strapping tape (7) is formed between the first and second conveying rest (20) and essentially transversely to the conveying direction (F), and a side guidance device (30) is arranged in each case at both sides of the first conveying rest (10), considered in the conveying direction (F), the side guidance devices (30) in each case comprise at least one guiding body (31) driven in a circulatory manner about at least two deflection elements which are distanced to one another, the side guidance devices (30) laterally guide the product stacks (2) and with the first conveying rest (10) form a conveying space,
**characterised in that**
a side guidance device (40) is arranged in each case at both sides of the second conveying rest (20) considered in the conveying direction (F), and these side guidance devices laterally guide the product stacks (20) and with the second conveying rest (20) enclose a further conveying space, and the side guidance devices (40) in each case comprise at least one guiding body (41) driven in a circulatory manner about at least two deflection elements which are distanced to one another, as well as in each case at least one advance limitation element (43) which can be driven in a circulatory manner, and which projects laterally into the conveying space and is designed to assume a contact fit with the product stack (2) for the purpose of preventing products or product units of the product stack (2) from slipping apart in the conveying direction (F).

2. A device according to claim 1, **characterised in that** the advance limitation element (43) is an advance limitation abutment which considered in the conveying direction (F) can be moved relative to the product stack (2) in a leading manner, in the conveying space.

3. A device according to one of the preceding claims, **characterised in that** the at least one advance limitation element (43) is arranged on the guiding body (41).

4. A device according to claim 1, **characterised in that** the side guidance device (30) comprises at least one advance limitation element (33) which can be driven in a circulatory manner, and which projects laterally into the conveying space and is designed to assume a contact fit with the product stack (2), for the purpose of preventing individual products or product units of the product stack (2) from slipping away in the conveying direction (F).

5. A device according to claim 4, **characterised in that** the advance limitation element (33) is an advance limitation abutment which in the conveying space can be moved in the conveying direction (F) in a leading manner relative to the product stack (2).

6. A device according to one of the claims 1 to 5, **characterised in that** the side guidance device (50) of the first conveying rest (10) comprises at least one advance abutment (53) which can be driven in a circulatory manner and which in the conveying space and considered in the conveying direction (F) is movable in a trailing manner relative to the product stack (2).

7. A device according to one of the claims 4 to 6, **characterised in that** the least one advance element (33) is arranged on the guiding body (31).

8. A device according to one of the preceding claims, **characterised in that** the guiding body (31, 41) is an extensive belt, in particular a module belt chain with a plurality of module belt links which are connected to one another.

9. A device according to one of the preceding claims, **characterised in that** the at least one advance limitation abutment (33, 43) is strip-like.

10. A method for strapping product stacks (2) with a device (1) according to one of the preceding claims, with the following steps:
- conveying a product stack (2) lying on the first conveying rest (10), in the conveying direction (F),
- receiving the products stack (2) which is conveyed by the first conveying rest (10), by the second conveying rest (20),
- conveying the product stack (2) further into a strapping position, in which the product stack (2) is arranged transversely over the strapping gap (4),
- strapping the products stack (2) with a strapping tape (7),
- conveying the strapped product stack (2) further,
wherein the advance limitation element (43) of the side guidance devices (40) of the second conveying rest (20) is co-moved in the conveying direction (F) laterally of or leading the product stack (2), and at least on braking the product stack (2) assumes a contact fit with this, so that products or product units of the product stack (2) cannot slip away in the conveying direction (F).

11. A method according to claim 10, **characterised in that** the advance limitation element (43) is an advance limitation abutment which is co-moved in the conveying direction (F) in a manner leading the product stack (2) and in a manner such that products stack (2) or individual product units come to abut on the advance limitation abutment (43) on braking the product stack (2).

## Revendications

1. Ensemble (1) de cerclage de piles (2) de produits, contenant un premier appui de transport (10) et un deuxième appui de transport (20) qui suit le premier appui de transport (10) dans la direction de transport (F) et est disposé à distance de lui, un interstice de cerclage (4) permettant de cercler la pile (2) de produits à l'aide d'une bande de cerclage (7) étant formé entre le premier et le deuxième appui de transport (20) essentiellement transversalement par rapport à la direction de transport (F), des dispositifs respectifs (30) de guidage latéral étant disposés des deux côtés du premier appui de transport (10) dans la direction de transport (F) et comprenant chacun au moins un corps de guidage (31) entraîné en boucle fermée autour d'au moins deux organes de renvoi disposés à distance l'un de l'autre, qui guident latéralement la pile (2) de produits et forment un espace de transport avec le premier appui de transport (10),
**caractérisé en ce que**
des dispositifs respectifs (40) de guidage latéral sont disposés des deux côtés du deuxième appui de transport (20) dans la direction de transport (F), guident latéralement la pile (2) de produits et forment un autre espace de transport avec le deuxième appui de transport (20), **en ce que** les dispositifs (40) de guidage latéral contiennent chacun au moins un corps de guidage (41) entraîné en boucle fermée autour d'au moins deux organes de renvoi disposés à distance mutuelle et **en ce qu'**au moins un élément (43) de limitation de l'avancement apte à être entraîné en boucle fermée et débordant latéralement dans l'espace de transport est conçu pour engager la pile (2) de produits en vue d'empêcher que des produits ou des unités de produits individuels se désagrègent de la pile (2) de produits dans la direction de transport (F).

2. Ensemble selon la revendication 1, **caractérisé en ce que** l'élément (43) de limitation de l'avancement est une butée de limitation de l'avancement qui peut être déplacée dans l'espace de transport, à l'avant de la pile (2) de produits dans la direction de transport (F).

3. Ensemble selon l'une des revendications précédentes, **caractérisé en ce que** le ou les éléments (43) de limitation de l'avancement sont disposés sur le corps de guidage (41).

4. Ensemble selon la revendication 1, **caractérisé en ce que** le dispositif (30) de guidage latéral contient au moins un élément (33) de limitation de l'avancement apte à être entraîné en boucle fermée, qui déborde latéralement dans l'espace de transport et est conçu pour engager la pile (2) de produits en vue d'empêcher que des produits ou des unités de produits individuels se désagrègent de la pile (2) de produits dans la direction de transport (F).

5. Ensemble selon la revendication 4, **caractérisé en ce que** l'élément (33) de limitation de l'avancement est une butée de limitation de l'avancement qui peut être déplacée dans l'espace de transport, à l'avant de la pile (2) de produits dans la direction de transport (F).

6. Ensemble selon l'une des revendications 1 à 5, **caractérisé en ce que** le dispositif (50) de guidage latéral du premier appui de transport (10) contient au moins une butée d'avancement (53) apte à être entraînée en boucle fermée et qui peut être déplacée en arrière de la pile (2) de produits dans la direction de transport (F), dans l'espace de transport.

7. Ensemble selon l'une des revendications 4 à 6, **caractérisé en ce que** le ou les éléments (33) de limitation de l'avancement sont disposés sur le corps de guidage (31).

8. Ensemble selon l'une des revendications précédentes, **caractérisé en ce que** le corps de guidage (31, 41) est une bande de forme plate, en particulier une chaîne de bande modulaire présentant plusieurs organes de bande modulaire reliés les uns aux autres.

9. Ensemble selon l'une des revendications précédentes, **caractérisé en ce que** la ou les butées (33, 43) de limitation de l'avancement ont la forme de languettes.

10. Procédé de cerclage de piles (2) de produits à l'aide d'un ensemble (1) selon l'une des revendications précédentes, le procédé présentant les étapes suivantes :
- transport dans la direction de transport (F) d'une pile (2) de produits posée sur le premier appui de transport (10),
- reprise par un deuxième appui de transport (20) de la pile (2) de produits transportée par le premier appui de transport (10) et
- poursuite du transport de la pile (2) de produits dans une position de cerclage dans laquelle la pile (2) de produits est disposée transversalement au-dessus de l'interstice de cerclage (4),
- cerclage de la pile (2) de produits à l'aide d'une bande de cerclage (7),
- poursuite du transport de la pile (2) de produits cerclée,
l'élément (43) de limitation de l'avancement des dispositifs (40) de guidage latéral du deuxième appui de transport (20) sont entraînés dans la direction de transport (F) latéralement ou à l'avant de la pile (2) de produits et, au moins lors du freinage de la pile (2) de produits, engage cette dernière de telle sorte que des produits ou des unités de produits ne puissent se désagréger de la pile (2) de produits dans la direction de transport (F).

11. Procédé selon la revendication 10, **caractérisé en ce que** l'élément (43) de limitation de l'avancement est une butée de limitation de l'avancement déplacée dans la direction de transport (F) à l'avant de la pile (2) de produits de telle sorte que lors du freinage de la pile (2) de produits, la pile (2) de produits ou certaines unités de produits viennent buter contre la butée (43) de limitation de l'avancement.
